# EUROPÄISCHE PATENTSCHRIFT

(11) **EP 0 452 639 B1**
(45) Veröffentlichungstag und Bekanntmachung des Hinweises auf die Patenterteilung: **17.05.1995**
(21) Anmeldenummer: 91102864.5
(22) Anmeldetag: 27.02.1991
(51) Int. Cl.: H02B 13/035, H02B 13/075

(54) **Metallgekapselte, druckgasisolierte Schaltanlage für kompakte Netzstationen im Mittelspannungsbereich**
Metal-clad, gas-insulated switch gear for a compact transformer station in the middle range
Installation de commutation blindée métallique à gaz isolant pour un poste de transformation moyenne tension compacte

(30) Priorität: 19.04.1990 DE 4012390
(43) Veröffentlichungstag der Anmeldung: 23.10.1991
(73) Patentinhaber: Felten & Guilleaume Energietechnik AG, D-51058 Köln (DE)
(72) Erfinder: Mooz, Dietrich, W-4150 Krefeld (DE); Dirks, Rolf, W-4156 Willich 4 (DE); Deharde, Horst, W-4151 Kempen 1 (DE)

(56) Entgegenhaltungen:
- EP-A- 0 291 762
- DE-A- 3 421 265
- DE-U- 1 907 464
- DE-U- 1 989 911
- DE-U- 9 004 442
- US-A- 3 449 508

## Beschreibung

Metallgekapselte, druckgasisolierte Schaltanlage für kompakte Netzstationen im Mittelspannungsbereich.

Die Erfindung betrifft eine metallgekapselte, druckgasisolierte Schaltanlage gemäß dem Oberbegriff des Anspruchs 1.

In den Mittelspannungsverteilernetzen sind Lasttrennschalteranlagen nahezu überall im Einsatz. Die bevorzugte Ausführung sind druckgasisolierte Anlagen. In diesen Anlagen werden ausnahmslos zur Verbindung der einzelnen Phasenkontakte raumbeanspruchende, zum Teil sich kreuzende und formaufwendige Sammelschienen eingesetzt. Der Trend zu immer kleiner werdenden Schaltanlagen führt zwangsläufig zu überlegungen, wie derartige Schaltanlagen bei Erhalt der vollen Leistungsfähigkeit sinnvoll verändert werden können.

Eine Schaltanlage mit den Merkmalen des Oberbegriffs ist bereits bekannt (DEP 32 15 234). Diese Schaltanlage ist aufgrund ihrer Konzeption nicht auf kleinstem Raum einzusetzen.

Der Erfindung liegt nun die Aufgabe zugrunde, bei einer Schaltanlage der zuvor geschilderten Art die Anzahl der Teile erheblich zu verringern und diese Teile so zu gestalten und anzuordnen, daß eine Schaltanlage für den Einsatz auf kleinstem Raum entsteht.

Diese Aufgabe wird erfindungsgemäß durch die im Kennzeichen des Anspruchs 1 angegebene Kombinaton von konstruktiven Merkmalen gelöst.

Die mit der Erfindung erzielten Vorteile bestehen darin, daß die neue Konzeption einer Sammelschiene in Form eines gemeinsamen Kontaktstücks für die Lasttrennschalter einer Phase die Möglichkeit geschaffen hat, die einzelnen Teile der Schaltanlage raumsparender als bisher anzuordnen, wodurch die Schaltanlage erheblich verkleinert werden kann.

Vorteilhafte Aus-und Weiterbildungen des Gegenstandes nach Anspruch 1 sind den Unteransprüchen zu entnehmen.

Ein Ausführungsbeispiel der Erfindung ist in Zeichnungen dargestellt und wird im folgenden näher erläutert. Es zeigen
Fig. 1 eine Schaltanlage bei abgenommener Vorderwand in Vorderansicht
Fig. 2 diese Schaltanlage bei abgenommener Seitenwand in Seitenansicht
Fig. 3 diese Schaltanlage mit einer Abdeckhaube und Einschüben in Vorderansicht
Fig. 4 diese Schaltanlage in Seitenansicht.

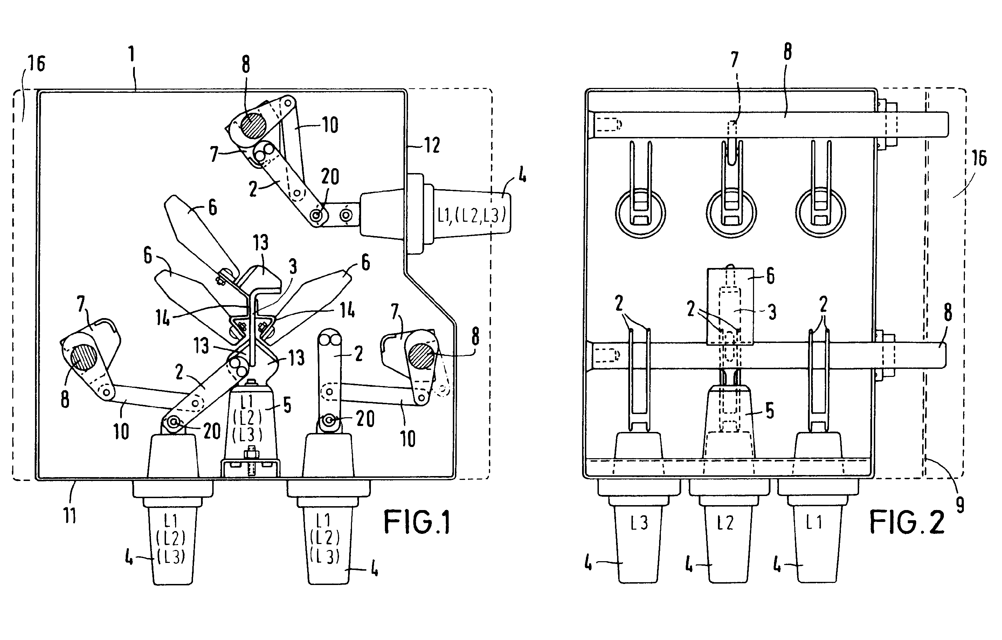

Nach Fig. 1 und 2 befinden sich in einem Gastank 1 jeweils drei Lasttrennschalter für die Phasen L 1, L 2 und L 3.

In Fig. 1 sind die Lasttrennschalter phasenweise hintereinander angeordnet, sodaß sich die Beschreibung auf die sichtbaren Schalteranordnungen bezieht. So sind für die Phase L 1 an der Unterseite 11 des Gastanks 1 zwei Durchführungen 4 und an einer Seitenwand 12 des Gastanks 1 eine Durchführung 4 herausgeführt. Im Innern des Gastanks 1 sind auf den Durchführungen 4 je zwei Schaltmesser2 mit Drehpunkten 20 angeordnet. Die Schaltmesser 2 können hierbei drei Stellungen einnehmen, nämlich eine "Ein"-Stellung, bei welcher die Schaltmesser2 ein gemeinsames Kontaktstück kontaktieren, eine "Aus"-Stellung, in welcherdie Schaltmesser 2 kontaktlos bleiben und eine "Geerdet"-Stellung, in welcher die Schaltmesser 2 einen Erdungskontakt 7, der direkt mit einer Schalterwelle 8 verbunden ist, kontaktieren. Die Verbindung der Schalterwelle 8 mit dem Schaltmesser 2 wird jeweils durch eine Koppelstange 10 hergestellt.

Das Kontaktstück 3 ist mit Kontaktflächen 13 ausgestattet, die von den jeweiligen Schaltmessern 2 kontaktiert werden. Außerdem trägt das Kontaktstück 3 Haltevorrichtungen 14, an denen Löscheinrichtungen 6 befestigt sind. Diese Löscheinrichtungen 6 sind an dem Kontaktstück 3 derart angeordnet, daß sie im Wirkungsbereich der ausschaltenden Schaltmesser 2 liegen. Mit 16 ist eine Abdeckhaube bezeichnet, die die Frontseite 9 abschließt.

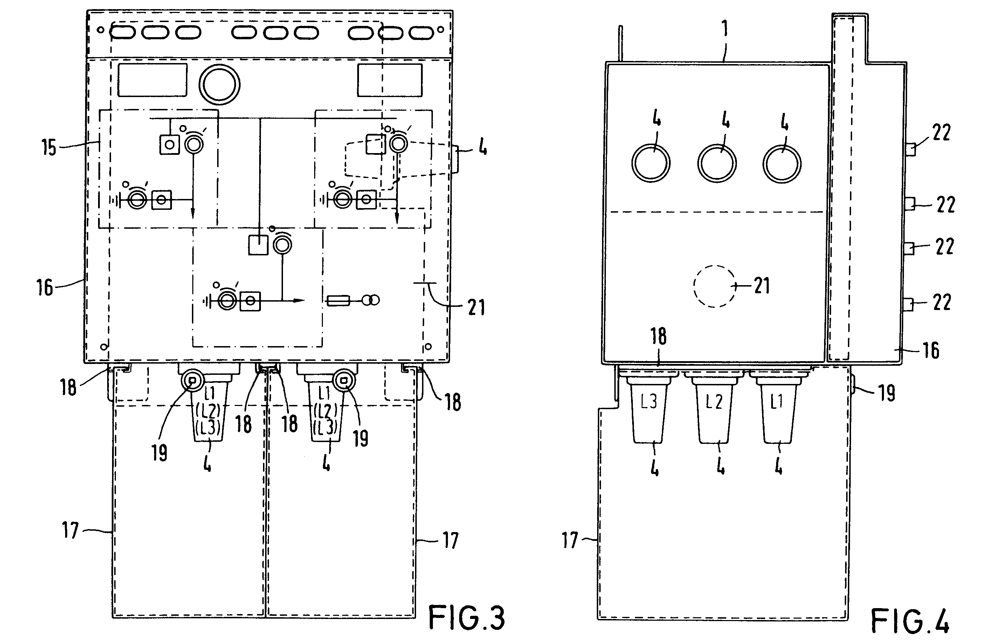

Nach Fig. 3 und 4 ist je Schalterwelle ein Dreistellung-Antrieb 15 vorgesehen, der mit der Abdeckhaube 16 kombiniert ist. Diese Abdeckhaube 16 enthält ein aufgedrucktes Blindschaltbild. Mit 21 ist eine Druckentlastungsmembrane bezeichnet.

Im Bereich der unteren Anschlüsse sind Blechabdeckungen für Kabelgarnituren vorgesehen, die als kastenförmige Einschübe 17 ausgebildet sind. Sie können nach vorne herausgezogen werden und gleiten dabei in Führungen 18, die am Gastank 1 angeformt sind. Mittels Vorreiber 19 können diese Einschübe 17 verschlossen werden. Die Einschübe 17 sind gegen den zugehörigen Dreistellungs-Antrieb 15 des Lasttrennschalters derart verriegelt, daß der Einschub 17 nur in der "Geerdet"-Stellung herausgezogen werden kann. Außerdem kann der Lasttrennschalter nur eingeschaltet werden, wenn der Einschub 17 völlig eingeschoben ist. Mit 22 sind die jeweiligen Antriebsbetätigungswellen bezeichnet.

## Patentansprüche

1. Metallgekapselte, druckgasisolierte Schaltanlage, mit einem Gastank für dreipolige, als Dreistellungsschalter ausgebildete Lasttrennschalter mit Schaltmessern, mit dazugehörigen Erdungsvorrichtungen, mit Durchführungen für den Anschluß von Kabeln und/oder Sicherungen, dadurch gekennzeichnet, daß mehrere Lasttrennschalter in dem Gastank (1) derart angeordnet sind, daß die Schaltmesser (2) jeder Phase in der "Ein"-Stellung ein gemeinsames, funktionsmäßig als Sammelschiene dienendes Kontaktstück (3) kontaktieren, daß das gemeinsame Kontaktstück (3) für jede Phase zwischen dem auf den Durchführungen (4) gelagerten Schaltmessern (2) für mehrere Lasttrennschalter eingesetzt und auf einem Stützer (5) befestigt ist, daß das gemeinsame Kontaktstück (3) mit Löscheinrichtungen (6) für die Schaltmesser (2) versehen ist, und daß die Erdungsvorrichtungen als mit einer Schalterwelle (8) verbundene Erdungskontakte (7) ausgebildet sind.

2. Schaltanlage nach Anspruch 1, dadurch gekennzeichnet, daß die Schalterwellen (8) rechtwinklig zur Frontseite (9) des Gastanks (1) angeordnet sind, und daß die Schalterwellen (8) über Koppelstangen (10) mit den parallel zur Frontseite (9) bewegbaren Schaltmessern (2) verbunden sind, die phasenweise hintereinander angeordnet sind, wobei die Schaltmesser direkt auf den Durchführungsbolzen drehbar (20) gelagert sind.

3. Schaltanlage nach einem der Ansprüche 1 oder 2, dadurch gekennzeichnet, daß der Gastank (1) mit mindestens drei Lasttrennschaltern bestückt ist, und daß die Durchführungen (4) von zwei Lasttrennschaltern an der Unterseite (11) und vom dritten Lasttrennschalter an einer der beiden Seitenwände (12) oder an der Oberseite des Gastanks (1) herausgeführt sind.

4. Schaltanlage nach einem der Ansprüche 1 bis 3, dadurch gekennzeichnet, daß jedes Kontaktstück (3) mit mehreren Kontaktflächen (13) für die Kontaktierung mit den Schaltmessern (2) versehen ist, und daß die Kontaktstücke (3) Haltevorrichtungen (14) aufweisen, an denen die Loscheinrichtungen (6) befestigt sind.

5. Schaltanlage nach einem der Ansprüche 1 bis 4, dadurch gekennzeichnet, daß für jede Phase ein Kontaktstück (3) eingesetzt ist, das jeweils auf einer Stützerleiste (5) befestigt ist, die mit der Unterseite (11) des Gastanks (1) verbunden ist.

6. Schaltanlage nach einem der Ansprüche 1 bis 5, dadurch gekennzeichnet, daß die Durchführungen (4) von außen auf den Gastank (1) aufschraubbar sind.

7. Schaltanlage nach einem der Ansprüche 1 bis 6, dadurch gekennzeichnet, daß die Schalterwellen (8) zur Frontseite (9) des Gastanks (1) herausgeführt sind und je Schalterwelle (8) ein Dreistellungs-Antrieb (15) an der Frontseite (9) angeordnet ist, der mit einer gemeinsamen Abdeckhaube (16) mit aufgedrucktem Blindschaltbild für alle Dreistellungs-Antriebe (15) versehen ist.

8. Schaltanlage nach einem der Ansprüche 1 bis 7, dadurch gekennzeichnet, daß die Durchführungen (4) für den Anschluß von Kabelgarnituren an der Unterseite (11) des Gastanks (1) mit Blechabdeckungen gesichert sind, die für jeden Lasttrennschalter als kastenförmiger, nach vorne herausziehbarer Einschub (17) ausgebildet ist.

9. Schaltanlage nach einem der Ansprüche 1 bis 8, dadurch gekennzeichnet, daß jeder mit einem Vorreiber (19) verschließbare Einschub (17) in am Gastank (1) angeformten Führungen (18) gleitbar ist und gegen den zugehörigen Dreistellungs-Antrieb (15) des Lasttrennschalters derart verriegelt ist, daß der Einschub (17) nur in der "Geerdet"-Stellung herausziehbar ist, und daß der Lasttrennschalter nur bei völlig eingeschobenem Einschub (17) einschaltbar ist.

## Claims

1. Metal-clad, gas-insulated switchgearwith a gas tank for three-way load-break switches designed as three-position disconnectors with switch blades; with associated earthing provisions, with bushings for connecting cables and/or fuses with the distinguishing feature that several load-break switches are arranged in gas tank (1) such that, when in the "on" position, the switch blades (2) of each phase make contact with a common contact member (3) which fulfils the function of a busbar; that the common contact member (3) is used for each phase between the switch blades (2) located on the bushings (4) for several load-break switches and is mounted on a post insulator (5); that the common contact member (3) is provided with quenching devices (6) for the switch blades (2), and that the earthing facilities are designed as earth terminals (7) which are connected to a switch shaft (8).

2. Switchgear according to claim 1 with the distinguishing feature that switch shafts (8) are arranged perpendicular to front panel (9) of gas tank (1) and that switch shafts (8) are connected to switch blades (2), which move parallel to front panel (9), via coupling rods (10) and are arranged in phase sequence, whereby the switch blades are located directly in a pivot mounting (20) on the bushing conductor studs.

3. Switchgear according to claim 1 or 2 with the distinguishing feature that gas tank (1) is equipped with at least three load-break switches and that the bushings (4) of two load-break switches are brought out at the bottom (11), and the bushing of the third load-break switch is brought out at one of the two side walls (12) or at the top of gas tank (1).

4. Switchgear according to one of claims 1 to 3 with the distinguishing feature that each contact member (3) is provided with several contact surfaces (13) for making contact with switch blades (2), and that contact members (3) have holders (14) on which quenching devices (6) are mounted.

5. Switchgear according to claims 1 to 4 with the distinguishing feature that one contact member (3) is used for each phase and is mounted on a post insulator strip (5) in each case, which is connected to the bottom (11) of gas tank (1).

6. Switchgear according to one of claims 1 to 5 with the distinguishing feature that bushings (4) can be screwed onto gas tank (1) from outside.

7. Switchgear according to one of claims 1 to 6 with the distinguishing feature that switch shafts (8) are brought out at the front (9) of gas tank (1) and that a three-position drive (15) for each switch shaft is installed on the front panel (9), which is fitted with a common cover (16) on which a mimic diagram is printed for all three-position drives (15).

8. Switchgear according to one of claims 1 to 7 with the distinguishing feature that bushings (4) for connecting the cable fittings at the bottom (11) of gas tank (1) are secured by sheet metal covers designed as box-shaped slide-in units (17) for each load-break switch, which can be drawn out towards the front.

9. Switchgear according to one of claims 1 to 8 with the distinguishing feature that each of the slide-in units (17), which can be engaged with fastener (19), can be moved in guides (18) moulded onto gas tank (1) and is interlocked with the associated three-position drive (15) of the load-break switch in such a way that slide-in unit (17) can be withdrawn only in the "earthed" position and that the load-break switch can be switched on only if slide-in unit (17) is fully inserted.

## Revendications

1. Installation de commutation blindée métallique à gaz isolant pour sectionneur à coupure en charge, triphasé, constitué sous la forme d'un sectionneur trois positions, comprenant des couteaux d'interrupteur, des dispositifs correspondants de mise à la terre, des passages pour le raccordement des câbles et/ou des fusibles, installation caractérisée en ce que plusieurs sectionneurs à coupure en charge sont disposés dans le réservoir de gaz (1) de telle sorte que les couteaux d'interrupteur (2) de chaque phase viennent en contact dans la position « marche » avec une pièce de contact (3) commune, servant de façon fonctionnelle de barre collectrice, en ce que la pièce de contact commune (3) est montée pour chaque phase entre les couteaux d'interrupteur (2) montés sur les passages (4) et est fixée sur un support (5), en ce que la pièce de contact commune (3) est pourvue de dispositifs d'extinction (6) pour les couteaux d'interrupteur (2) et en ce que les dispositifs de mise à la terre sont constitués sous la forme de contacts de mise à la terre (7) reliés à un arbre de commutation (8).

2. Installation de commutation selon la revendication 1, caractérisée en ce que les arbres de commutation (8) sont disposés à angle droit par rapport à la face frontale (9) du réservoir de gaz (1) et en ce que les arbres de commutation (8) sont reliés au moyen de tiges d'accouplement (10) aux couteaux d'interrupteur (2) pouvant se déplacer parallèlement à la face frontale (9), couteaux qui sont disposés les uns derrière les autres par phase, les couteaux d'interrupteur étant directement montés de façon à pouvoir tourner sur les axes de passage (20).

3. Installation de commutation selon l'une des revendications 1 ou 2, caractérisée en ce que le réservoir de gaz (1) est garni d'au moins trois sectionneurs à coupure en charge et en ce que les passages (4) sont formés à partir de deux sectionneurs à coupure en charge sur la face inférieure (11) et à partir du troisième sectionneur en charge sur l'une des deux parois latérales (12) ou sur la face supérieure du réservoir de gaz (1).

4. Installation de commutation selon l'une des revendications 1 à 3, caractérisée en ce que chaque pièce de contact (3) est pourvue de plusieurs surfaces de contact (13) pour la mise en contact avec les couteaux d'interrupteur (2) et en ce que les pièces de contact (3) présentent des dispositifs de butée (14), sur lesquels sont fixés les dispositifs d'extinction (6).

5. Installation de commutation selon l'une des revendications 1 à 4, caractérisée en ce que pour chaque phase on monte une pièce de contact (3), qui est fixée respectivement sur une barrette de support (5), reliée à la face inférieure (11) du réservoir de gaz (1).

6. Installation de commutation selon l'une des revendications 1 à 5, caractérisée en ce que les passages (4) peuvent être vissés de l'extérieur sur le réservoir de gaz (1).

7. Installation de commutation selon l'une des revendications 1 à 6, caractérisée en ce que les arbres de commutation (8) sont dirigés vers la face frontale (9) du réservoir de gaz (1) et que pour chaque arbre de commutation (8) on dispose un mécanisme d'entraînement (15) à trois positions sur la face frontale (9), mécanisme qui est pourvu d'un capot de recouvrement commun (16) avec un tableau à schéma imprimé pour tous les mécanismes d'entraînement à trois positions (15).

8. Installation de commutation selon l'une des revendications 1 à 7, caractérisée en ce que les passages (4) pour le raccordement des garnitures de câbles à la face inférieure (11) du réservoir de gaz (1) sont fixés avec des couvercles en tôle, qui sont constitués pour chaque sectionneur à coupure en charge sous la forme d'un coffret embrochable (17) en forme de boîtier que l'on peut extraire en le tirant en avant.

9. Installation de commutation selon l'une des revendications 1 à 8, caractérisée en ce que chaque coffret embrochable (17), qui peut coulisser avec un tourniquet (19), peut glisser dans des guides (18) rapportés et est verrouillé contre le mécanisme à trois positions correspondant (15) du sectionneur à coupure en charge, de telle sorte que le coffret embrochable (17) ne puisse être retiré que dans la position où il y a « mise à la terre » et que le sectionneur à coupure en charge ne puisse être enclenché que quand le coffret (17) est complètement embroché.
